# EUROPÄISCHE PATENTSCHRIFT

(11) **EP 1 563 970 B1**
(45) Veröffentlichungstag und Bekanntmachung des Hinweises auf die Patenterteilung: **20.12.2006**
(21) Anmeldenummer: 05002561.8
(22) Anmeldetag: 08.02.2005
(51) Int. Cl.: B27D 5/00, B29C 63/00, B32B 21/00

(54) **Verfahren zum Herstellen von Platten aus Holz und/oder Holzaustauschstoffen und danach hergestellte Platte**
Process for manufacturing panels of wood and/or wood substitutes and panel obtained thereby
Procédé de fabrication de panneaux en bois ou matériaux de substitution du bois et panneau ainsi obtenu

(30) Priorität: 12.02.2004 DE 102004007157
(43) Veröffentlichungstag der Anmeldung: 17.08.2005
(73) Patentinhaber: IMA Klessmann GmbH Holzbearbeitungssysteme, 32312 Lübbecke (DE)
(72) Erfinder: Hucke, Helmut, 32312 Lübbecke (DE); Hollmer, Wilfried, 32369 Rahden (DE)
(74) Vertreter: Elbertzhagen, Otto

(56) Entgegenhaltungen:
- EP-A- 0 580 067
- DE-A1- 3 926 161
- FR-A- 1 530 769

## Beschreibung

Die Erfindung bezieht sich auf ein Verfahren gemäß dem Oberbegriff des Patentanspruchs 1 und auf eine Platte nach dem Oberbegriff des Anspruchs 7.

In bekannter Weise werden als Möbel- oder Bauelemente verwendbare Platten aus Holz und/oder Holzersatzstoffen aus Ausgangsmaterialien hergestellt, die einen einschichtigen Aufbau aufweisen. Zwar kann, wie es bei einem Spanplattenmaterial der Fall ist, der Plattenwerkstoff zu den Plattenbreitseiten hin eine dichtere Struktur als zur Querschnittsmitte der Platten hin aufweisen, dennoch hat man es hier mit einem Plattenaufbau zu tun, dessen Festigkeitseigenschaften über den Querschnitt hinweg gesehen im wesentlichen gleich sind.

Anders verhält es sich bei den sogenannten Leichtbauplatten, die einen Sandwich-Aufbau aufweisen (siehe z.B. DE-A-39 26 161). Solche Platten werden vornehmlich zur Herstellung von Zimmertüren verwendet, und sie sind bei einer fertigen Tür mittels Rahmenhölzern eingefaßt, welche an den Schmalseitenflächen der Leichtbauplatten die hier freiliegende Zwischenschicht zwischen den Deckschichten abdeckt. Bei Platten, wie sie für Möbeltüren, Arbeitsplatten oder Paneelen verwendet werden, auf deren Schmalseiten ein Kantenstreifen, wie ein Dekorstreifen, aufgebracht ist, hat man solche Leichtbauplatten bislang nicht verwendet, weil ein sicherer Halt des Kantenstreifens, der eine relativ geringe Dicke aufweist, nicht realisiert werden konnte.

Der Erfindung liegt deshalb die Aufgabe zugrunde, ein Verfahren und eine Platte der eingangs genannten Art zu schaffen, welche den Einsatz von leichteren und billigeren Plattenwerkstoffen ermöglichen, wobei eine dauerfeste Anbringung des die Schmalseitenflächen der Platten nach außen hin abdeckenden Kantenstreifens erreicht ist.

Diese Aufgabe wird durch die Gesamtheit der Verfahrensmerkmale nach Anspruch 1 und der gegenständlichen Merkmale nach Anspruch 7 gelöst.

Für die Erfindung ist wesentlich, durch den in die Schmalseitenflächen der jeweiligen Sandwich-Platte eingesenkten Einlagestreifen eine höhere Festigkeit im Plattenrandbereich in zweifacher Hinsicht zu erreichen. Zum einen werden die Deckschichten der Sandwich-Platten relativ zueinander stabilisiert und zum anderen ist eine stabile Anlagefläche zum Aufbringen des Kantenmaterials an der nach außen hin liegenden Seite des Einlagestreifens und der verbliebenen Platten-Schmalseiten-Teilflächen vorhanden.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen schematischen Querschnitt durch einen Plattenrohling zur Herstellung einer als Möbel- oder Bauelement verwendbaren Platte,
- Fig. 2: in gleicher Darstellung den Plattenrohling nach Fig. 1 nach einer spangebenden Bearbeitung,
- Fig. 3: in gleicher Darstellung den Plattenrohling nach den Figuren 1 und 2 nach einem weiteren Bearbeitungsschritt und
- Fig. 4: in gleicher Darstellung einen Querschnitt durch die fertige, aus dem Plattenrohling hergestellte Platte.

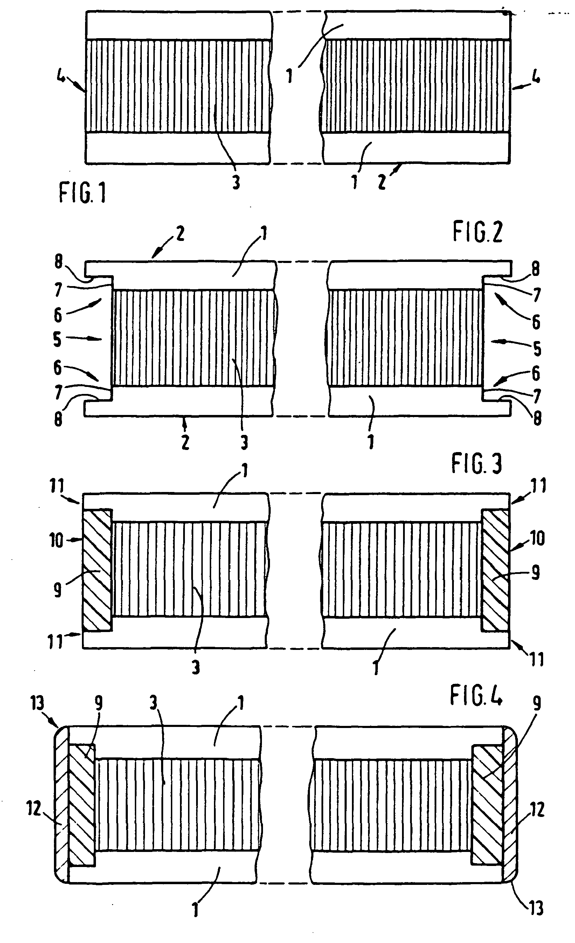

Im einzelnen zeigt Fig. 1 einen Plattenrohling, der einen Sandwich-Aufbau hat. Zwischen zwei außenliegenden Deckschichten 1 befindet sich eine Zwischenschicht 3, die eine geringere Festigkeit als die Deckschichten 1 hat. Dies kann zum einen an dem für die Zwischenschicht 3 verwendeten Werkstoff liegen, bei dem es sich vornehmlich um einen sogenannten Leichtbauwerkstoff handelt. Entweder wird dazu ein geschäumter Kunststoff, wie Polystyrol, verwendet, oder es wird die Zwischenschicht 3 aus hochkant angeordneten Pappstegen, welche in Wabenform angeordnet sind und sich zwischen den Deckschichten 1 erstrecken, gebildet. Des weiteren kann die Zwischenschicht 3 auch aus demselben Ausgangswerkstoff wie die Deckschichten 1 bestehen, der im Gegensatz zu den Deckschichten 1 im Bereich der Zwischenschicht 3 eine offene Struktur aufweist, wie es bei den sogenannten Röhrenspanplatten der Fall ist. Die Deckschichten 1 weisen eine durchgehend geschlossene Oberfläche an den Breitseiten 2 auf, wobei je nach Materialwahl die Oberflächen der Breitseiten 2 der Deckschichten 1 oberflächenfertig oder mit einer Oberflächenbeschichtung ausgestattet sind. Je nachdem verwendet man für die Deckschichten 1 ein gegebenenfalls dekorbeschichtetes Spanplattenmaterial, ein MDF- oder ein HDF-Material, letzteres ist insbesondere für lackierte Oberflächen geeignet.

Der Plattenrohling gemäß Fig. 1 wird aus einer großformatigen Platte mittels einer Aufteilvorrichtung, wie einer Aufteilsäge, ausgeschnitten. Danach ist in der Regel noch eine Formatierung erforderlich, die vor allem dann vorgesehen werden muß, wenn die fertige Platte, die als Möbel- oder Bauelement verbaut werden soll, gerundete Ecken oder geschweifte Kanten aufweist. Dazu wird der Plattenrohling an seinen Schmalseiten 4 spannehmend bearbeitet. Dies geschieht entweder mittels eines oder mehrerer Fräser oder Sägen, mit denen ausschließlich die Formatierung des Plattenrohlings vorgenommen wird, oder mittels eines oder mehrerer Formfräswerkzeuge, die sogleich diejenige Kontur in die Schmalseiten des Plattenrohlings einschneiden, wie in Fig. 2 wiedergegeben ist.

So erkennt man in Fig. 2 eine in die Schmalseiten 4 des Plattenrohlings eingesenkte Nut 5, die mit einem Formfräswerkzeug eingeschnitten wird. Dies geschieht nicht nur unter entsprechendem Abtrag des Materials der Zwischenschicht 3 im Randbereich des Plattenrohlings, es wird auch in den zur Zwischenschicht 3 hin liegenden Innenbereich der Deckschichten 1 eingeschnitten. Dadurch weisen die Deckschichten 1 Falze 6 auf, wobei die Falzinnenseiten 7 den äußeren Bereich des Nutgrundes der Nut 5 bilden und die nach außen laufenden, einander gegenüberliegenden Falzseiten 8 mit den Breitseiten 2 der Deckschichten 1 parallel sind. Insgesamt hat die in die Schmalseiten 4 des Plattenrohlings 1 eingeschnittene Nut 5 einen rechteckigen Querschnitt, dementsprechend stehen die Innenseiten 7 und die nach außen laufenden Seiten 8 der Falze 6 rechtwinklig zueinander. In anderer nicht dargestellter Ausführung kann die Nut 5 auch einen trapezförmigen Querschnitt aufweisen. Entweder erweitert sich die Nut 5 zum Platteninneren hin und bildet eine schwalbenschwanzförmige Aufnahme, oder sie erweitert sich mit ihrer Trapezform nach außen hin.

Wie Fig. 3 veranschaulicht, wird in die Nut 5 an den Schmalseiten 4 des bearbeiteten Plattenrohlings ein Einlagestreifen 9 eingeklebt. Der Einlagestreifen 9 hat das der Nut 5 entsprechende Querschnittsformat, ist im vorliegenden Fall also rechteckig und füllt die Nut 6 formschlüssig aus. Ist die Nut 5 im Querschnitt trapezförmig ausgeführt und erweitert sich nach innen hin, kann der Einlagestreifen auch in die Nut 5 eingerastet werden, sofern er eine dementsprechende trapezförmige Kontur im Querschnitt hat. Grundsätzlich kann hierbei auf das Einkleben verzichtet werden, was auch bei rechteckigen Gestaltungsformen der Nut 5 und des Einlagestreifens 9 grundsätzlich möglich ist, wenn durch eine Verklemmung gegebenenfalls ergänzt durch eine Verzahnung ein ausreichend fester Sitz des Einlagestreifens 9 in der Nut erreicht wird.

In jedem Fall soll die nach außen hin liegende Seite 10 des Einlagestreifens 9 flächenbündig mit denjenigen Schmalseitenflächen 11 der Deckschichten 1 sein, die durch das Einfräsen der Nut 5 verblieben sind. Insgesamt weist der in dieser Weise weiter bearbeitete Plattenrohling durchgehend ebene, geschlossene Schmalseitenflächen auf, an denen infolge Kaschierens durch den Einlagestreifen 9 die Zwischenschicht 3 des Plattenrohlings nicht freiliegt. Um eine besonders ebene, plane außenliegende Seite 10 des Einlagestreifens 9 und damit flächenbündige, ebene Schmalflächenseiten 11 der Deckschichten 1 zu erzielen, kann nach dem Einbringen des Einlagestreifens 9 in die Nut 5 ein Planfräsen der geschlossenen Schmalseiten des Plattenrohlings vorgenommen werden. Dies kann mit einem einzigen Werkzeug vorgenommen werden, welches über die außenliegende Seite 10 des Einlagestreifens 9 und die beiden Schmalflächenseiten 11 der Deckschichten 1 hinwegreicht.

Der Einlagestreifen 9 hat eine ausreichende Festigkeit, die derjenigen der Deckschichten 1 zumindest entspricht, also höher als diejenige der Zwischenschicht 3 des Plattenrohlings ist. Der Einlagestreifen 9 dient jedoch nicht nur zu einer Stabilisierung des Plattenrandes, der deckt auch eine offene, mit Zwischenräumen versehene Struktur der Zwischenschicht 3 nach außen hin ab. Zweckmäßig besteht der Einlagestreifen 9 aus einem Kunststoff, der mittels eines geeigneten Klebers in die Nut 5 dauerhaft eingeklebt ist.

Auf die durchgehend ebene, nach außen hin liegende Seite 10 des Einlagestreifens 9 und die vorerwähnten, verbliebenen Schmalseitenflächen 11 der Deckschichten 1 wird ein Kantenstreifen 12 dauerhaft aufgeklebt, der sowohl auf der nach außen hin liegenden Seite 10 des Einlagestreifens 9 als auch auf den verbliebenen Schmalseitenflächen 11 der Deckschichten 1 haftet. Dazukann, je nach dem Kunststoffmaterial, welches für den Einlagestreifen 9 vorgesehen ist, es erforderlich sein, auf die nach außen hin liegende Seite 10 dieses Streifens 9 einen Primer aufzutragen. Der Primer kann zuvor schon auf den Einlagestreifen 9 aufgebracht worden sein, bevor er in die Nut 5 an den Schmalseiten des Plattenrohlings eingebracht wird. Die nachträgliche Aufbringung des Primers auf die außenliegende Seite 10 des Einlagestreifens 9 ist dann erforderlich, wenn - wie vorstehend beschrieben - ein Planfräsen an den Platten-Schmalseiten vorgenommen wird. Der Kantenstreifen 12 schließt bündig an die Breitseiten 2 der Deckschichten 1 an. Damit dies ohne störende Überstände erreicht wird, nimmt man ein sogenanntes Bündigfräsen an dem angeklebten Kantenstreifen 12 vor, bei dem dessen Längskanten 13 entsprechend bearbeitet werden.

## Patentansprüche

1. Verfahren zum Herstellen von als Möbel- oder Bauelemente verwendbaren Platten aus Holz und/oder Holzersatzstoffen, die entlang ihrer Schmalseiten zur Formatierung spannehmend bearbeitet werden, wonach auf die formatierten Schmalseiten ein Kantenstreifen (12) aufgebracht wird, der zwecks eines bündigen Anschlusses an die Platten-Breitseiten entlang seiner Längskanten befräst wird,
**dadurch gekennzeichnet,**
**daß** jeweils ein Plattenrohling mit einem Sandwich-Aufbau verwendet wird, der zwischen die Platten-Breitseiten mit einer durchgehenden Oberfläche bildenden Deckschichten von festerer Konsistenz zumindest eine Zwischenschicht (3) aufweist, die einen relativ zu den Deckschichten (1) leichteren Aufbau von geringerer Festigkeit hat, und daß beim oder nach dem Formatieren in die Schmalseiten des Plattenrohlings unter Anschneiden der Zwischenschicht und Einschneiden einander gegenüberliegender Falze an den Innenseiten der Deckschichten eine Nut eingefräst wird, in die anschließend ein querschnittsgleicher Einlagestreifen (9) mit seiner nach außen hin liegenden Seite flächenbündig mit den verbliebenen Schmalseiten-Teilflächen (11) der Deckschichten eingebracht wird, wonach der Kantenstreifen auf die nach außen hin liegende Seite (10) des Einlagestreifens und die Schmalseiten-Teilflächen der Deckschichten aufgebracht wird.

2. Verfahren nach Anspruch 1,
**dadurch gekennzeichnet,**
**daß** nach dem Einbringen des Einlagestreifens in die an den Schmalseiten des Plattenrohlings eingearbeitete Nut die nach außen hin liegende Seite des Einlagestreifens und die verbliebenen Schmalseiten-Teilflächen der Deckschichten plan gefräst werden.

3. Verfahren nach Anspruch 1 oder 2,
**dadurch gekennzeichnet,**
**daß** der Einlagestreifen in die in die Schmalseiten des Plattenrohlings eingearbeitete Nut eingeklebt wird.

4. Verfahren nach einem der Ansprüche 1 - 3,
**dadurch gekennzeichnet,**
**daß** als Einlagestreifen ein Kunststoffstreifen verwendet wird.

5. Verfahren nach Anspruch 4,
**dadurch gekennzeichnet,**
**daß** auf die nach außen hin liegende Seite des Einlagestreifens ein Primer aufgetragen und danach der Kantenstreifen auf diese Seite des Einlagestreifens und die Schmalseiten-Teilflächen der Deckschichten aufgeklebt wird.

6. Verfahren nach Anspruch 1,
**dadurch gekennzeichnet,**
**daß** der Einlagestreifen kraft- oder formschlüssig in die in die Schmalseiten des Plattenrohlings eingearbeitete Nut eingedrückt wird.

7. Verfahren nach einem der Ansprüche 1 - 6,
**dadurch gekennzeichnet,**
**daß** ein Plattenrohling verwendet wird, dessen Deckschichten aus einem Spanplattenmaterial oder MDF-Material und dessen Zwischenschicht aus einem Leichtbaustoff bestehen.

8. Verfahren nach Anspruch 7,
**dadurch gekennzeichnet,**
**daß** ein Plattenrohling verwendet wird, dessen Zwischenschicht aus zwischen den Deckschichten hochkant sich erstreckenden Pappstegen mit einer Wabenstruktur besteht.

9. Verfahren nach einem der Ansprüche 1 - 8,
**dadurch gekennzeichnet,**
**daß** als Plattenrohling eine Röhrenspanplatte verwendet wird, deren innenliegende Röhrenstruktur die Mittelschicht bildet.

10. Platte aus Holz und/oder Holzersatzstoffen zur Verwendung als Möbel- oder Bauelement, auf deren Schmalseiten ein Kantenstreifen angeordnet ist, der an die Platten-Breitseiten bündig anschließt,
**dadurch gekennzeichnet,**
**daß** sie einen Sandwich-Aufbau mit an den Platten-Breitseiten jeweils eine durchgehende Oberfläche bildenden Deckschichten (1) von festerer Konsistenz und zumindest eine Zwischenschicht (3) aufweist, die einen relativ zu den Deckschichten (1) leichteren Aufbau von geringerer Festigkeit hat, und an den Platten-Schmalseiten (4) eine Nut (5) eingeschnitten ist, die sich von der Zwischenschicht (3) bis in die Deckschichten (1) hinein erstreckt, wodurch an den Innenseiten der Deckschichten (1) einander gegenüberliegende Falze (6) gebildet sind, wobei in diese Nut (5) ein damit querschnittsgleicher Einlagestreifen (9) eingelegt ist, der mit seiner nach außen hin liegenden Seite (10) flächenbündig mit den Platten-Schmalseiten-Teilflächen (11) der Deckschichten (1) in der Nut (5) einliegt, wobei der Kantenstreifen (12) auf die nach außen hin liegende Seite (10) des Einlagestreifens (9) und die Schmalseiten-Teilflächen (11) der Deckschichten (1) aufgebracht ist.

11. Platte nach Anspruch 10,
**dadurch gekennzeichnet,**
**daß** die Nut (5) an den Platten-Schmalseiten (4) und dementsprechend zum einen die Falze (6) an den Deckschichten (1) rechtwinklig sowie zum anderen der Einlagestreifen (9) im Querschnitt rechteckig sind.

12. Platte nach Anspruch 10,
**dadurch gekennzeichnet,**
**daß** die Nut (5) an den Platten-Schmalseiten (4) im Querschnitt schwalbenschwanzförmig ist und dementsprechend zum einen die Falze (6) an den Deckschichten (1) schiefwinklig sowie zum anderen der Einlagestreifen (9) im Querschnitt trapezförmig ist.

13. Platte nach Anspruch 10,
**dadurch gekennzeichnet,**
**daß** die Nut an den Platten-Schmalseiten (4) die Querschnittsform eines sich in Richtung nach außen hin erweiternden Trapezes hat und der Einlagestreifen (9) eine dementsprechende Trapezform aufweist.

14. Platte nach einem der Ansprüche 10 - 13,
**dadurch gekennzeichnet,**
**daß** der Einlagestreifen (9) aus Kunststoff besteht und an den verklebten Flächen mit einem Primer vorbehandelt ist.

15. Platte nach einem der Ansprüche 10 - 14,
**dadurch gekennzeichnet,**
**daß** der Einlagestreifen (9) aus dem gleichen Werkstoff wie die Deckschichten (1) besteht.

## Claims

1. Process for manufacturing panels of wood and/or wood substitutes which can be used as furniture or construction elements and which are machined by cutting along their narrow sides for formatting after which an edging strip (12) is applied to the formatted narrow sides wherein the edging strip is milled along its longitudinal edges in order to produce a flush connection with the broad sides of the plates,
**characterised in that**
a panel blank is used each time which has a sandwich structure which has between top layers of a more solid consistency which form the broad sides of the panel with a continuous surface at least one intermediate layer (3) which has a lighter structure of lesser strength in relation to the top layers (1), and that during or after formatting a groove is milled into the narrow sides of the panel blank by cutting in the intermediate layer and cutting opposing rebates on the insides of the top layers whereby then an insert strip (9) of identical cross section is inserted into the groove with its outer side having a flush surface with the remaining parts (11) of the narrow sides of the top layers, after which the edging strip is applied to the outer side (10) of the insert strip and the narrow side parts of the top layers.

2. Process according to claim 1,
**characterised in that**
after inserting the insert strip into the groove which has been worked into the narrow sides of the panel blank the side of the insert strip on the outside and the remaining narrow side parts of the top layers are milled flat.

3. Process according to claim 1 or 2,
**characterised in that**
the insert strip is stuck into the groove which has been worked into the narrow sides of the panel blank.

4. Process according to one of claims 1 to 3,
**characterised in that**
a plastics strip is used as the insert strip.

5. Process according to claim 4,
**characterised in that**
a primer is applied to the side of the insert strip which is on the outside and then the edging strip is stuck onto this side of the insert strip and the narrow side parts of the top layers.

6. Process according to claim 1,
**characterised in that**
the insert strip is pressed with force locking or positive locking engagement into the groove which has been worked into the narrow sides of the panel blank.

7. Process according to one of claims 1 to 6,
**characterised in that**
a panel blank is used whose top layers consist of a chip board material or MDF material and whose intermediate layer consists of a light structural material.

8. Process according to claim 7,
**characterised in that**
a panel blank is used whose intermediate layer consists of cardboard webs with honeycomb structure upended between the top layers.

9. Process according to one of claims 1 to 8,
**characterised in that**
a tubular chip board is used as the panel blank whose internal tubular structure forms the middle layer.

10. Panel of wood and/or wood substitutes for use as a furniture or construction element on the narrow sides of which an edging strip is mounted which adjoins flush with the broad sides of the panel,
**characterised in that**
it has a sandwich structure with top layers (1) of a more solid consistency each forming a continuous surface on the broad sides of the panel and with at least one intermediate layer (3) which has a lighter structure of lesser strength in relation to the top layers (1), and a groove (5) is cut into the narrow sides (4) of the panel and extends from the intermediate layer (3) up into the top layers (1) whereby rebates (6) are formed opposite one another on the insides of the top layers (1) whereby an insert strip (9) of identical cross section is inserted into this groove (5) and lies with its outer side (10) flush with the narrow side parts (11) of the top layers (1) in the groove (5), wherein the edging strip (12) is applied to the side (10) of the insert strip (9) which is on the outside and to the narrow side parts (11) of the top layers (1).

11. Panel according to claim 10,
**characterised in that**
the groove (5) in the panel narrow sides (4) and consequently the rebate (6) in the top layers (1) are on the one hand rectangular as well as on the other hand the insert strip (9) has a rectangular cross-section.

12. Panel according to claim 10,
**characterised in that**
the groove (5) in the narrow sides (4) of the panel has a dove-tailed cross-section and correspondingly on the one hand the rebate (6) in the top layers (1) is at an oblique angle and on the other hand the insert strip (9) has a trapezoidal cross-section.

13. Panel according to claim 10,
**characterised in that**
the groove in the narrow sides (4) of the panel has the cross-sectional shape of a trapeze which widens out towards the outside and the insert strip (9) has a corresponding trapezoidal shape.

14. Panel according to one of claims 10 to 13,
**characterised in that**
the insert strip (9) is made from plastics and is pretreated with a primer on the adhesive surfaces.

15. Panel according to one of claims 10 to 14,
**characterised in that**
the insert strip(9) is made from the same material as the top layers (1).

## Revendications

1. Procédé pour la fabrication de panneaux en bois et / ou en produits de remplacement de bois, utilisés comme éléments de meubles ou de construction, qui sont traités le long de leurs côtés étroits aux fins de mise à dimension avec enlèvement de copeaux, ce après quoi est appliquée sur les côtés étroits formatés une bande de revêtement de chants (12) qui est fraisée le long de ses bords longitudinaux pour l'obtention d'un raccord à ras des bords sur les côtés larges des panneaux,
**caractérisé en ce que**
l'on utilise chaque fois une préforme de panneau de structure sandwich qui présente, entre les couches extérieures de consistance plus ferme, formant les côtés larges du panneau avec une surface continue, au moins une couche intermédiaire (3) qui présente une structure plus légère, de plus faible résistance que les couches extérieures (1), et **en ce que**, lors du formatage ou après celui-ci, une rainure est fraisée dans les côtés étroits de la préforme de panneau, par incision de la couche intermédiaire et découpage de fentes opposées dans les surfaces intérieures des couches extérieures, rainure dans laquelle un intercalaire (9) de même coupe transversale est ensuite inséré, par son côté orienté vers l'extérieur, à surface plane par rapport aux autres surfaces partielles (11) des côtés étroits des couches extérieures, ce après quoi la bande de revêtement de chants est appliquée sur la face extérieure (10) de l'intercalaire et les surfaces partielles des côtés étroits des couches extérieures.

2. Procédé selon la revendication 1,
**caractérisé en ce que**, après l'insertion de l'intercalaire dans la rainure pratiquée sur les côtés étroits de la préforme de panneau, la face de l'intercalaire orientée vers l'extérieur et les surfaces partielles des côtés étroits des couches extérieures sont dressées à la fraise, à surface plane.

3. Procédé selon revendication 1 ou 2,
**caractérisé en ce que**
l'intercalaire est collé dans la rainure pratiquée dans les côtés étroits de la préforme de panneau.

4. Procédé selon l'une des revendications 1 à 3,
**caractérisé en ce que**
l'on utilise comme intercalaire une bande de matière synthétique.

5. Procédé selon la revendication 4,
**caractérisé en ce que**,
sur la face de l'intercalaire orientée vers l'extérieur, une couche de fond est appliquée et que la bande de revêtement de chants est ensuite collée sur cette face de l'intercalaire et les surfaces partielles des côtés étroits des couches extérieures.

6. Procédé selon la revendication 1,
**caractérisé en ce que**
l'intercalaire est pressé dans la rainure pratiquée dans les côtés étroits de la préforme de panneau et y est maintenu par adhérence ou emboîtement.

7. Procédé selon l'une des revendications 1 à 6,
**caractérisé en ce que**
l'on utilise une préforme de panneau dont les couches extérieures consistent en un matériau aggloméré ou en matériau MDF, et dont l'intercalaire est en matériau léger.

8. Procédé selon la revendication 7,
**caractérisé en ce que**
l'on utilise une préforme de panneau dont l'intercalaire consiste en pièces de carton de structure alvéolée s'étendant de chant entre les couches extérieures.

9. Procédé selon l'une des revendications 1 à 8,
**caractérisé en ce que**
l'on utilise en tant que préforme une plaque de copeaux tubulaire dont la structure tubulaire, orientée vers l'intérieur forme la couche centrale.

10. Panneau en bois ou en matériau de remplacement de bois destinés à être utilisés en tant qu'éléments de meubles ou de construction, sur les côtés étroits desquels est appliqué une bande de revêtement de chants qui est à ras des côtés larges du panneau,
**caractérisé en ce que**
celui présente une structure sandwich avec des couches extérieures (1) de consistance plus ferme, formant chacune une surface continue sur les côtés larges du panneau, et au moins une couche intermédiaire (3) qui, par rapport aux couches extérieures (1) présente une structure plus légère et une moins grande fermeté, et **en ce que**, sur les côtés étroits (4) du panneau, est pratiquée une rainure (5) qui s'étend de la couche intermédiaire (3) jusque dans les couches extérieures (1), ce qui fait que des pliures (6) opposées sont formées sur les faces intérieures des couches extérieures, un intercalaire (9) de même section transversale étant inséré dans cette rainure (5), la face (10) dudit intercalaire, orientée vers l'extérieur, étant à ras des surfaces partielles (11) des côtés étroits des couches extérieures (1), la bande de revêtement de chants (12) étant appliquée sur la face (10) de l'intercalaire (9), orientée vers l'extérieur, et sur les surfaces partielles (11) des côtés étroits des couches extérieures (1).

11. Panneau selon la revendication 10,
**caractérisé en ce que**,
d'une part, la rainure (5) sur les côtés étroits (4) dudit panneau et, de manière correspondante les pliures (6) sur les couches extérieures (1) sont à angle droit, et que, d'autre part, l'intercalaire (9) présente une section transversale rectangulaire.

12. Panneau selon la revendication 10,
**caractérisé en ce que**
la rainure (5) sur les côtés étroits (4) dudit panneau présente une section transversale en queue d'aronde et que, de manière correspondante, d'une part, les pliures (6) sur les couches extérieures (1) forment un angle oblique, et que, d'autre part, l'intercalaire (9) présente une section transversale en forme de trapèze.

13. Panneau selon la revendication 10,
**caractérisé en ce que**
la rainure sur les côtés étroits (4) dudit panneau présente une section transversale en forme de trapèze s'élargissant vers l'extérieur, et que l'intercalaire (9) présente de manière correspondante une forme trapézoïdale.

14. Panneau selon l'une des revendications 10 à 13,
**caractérisé en ce que**
l'intercalaire (9) consiste en matière plastique et est traité avec une couche de fond aux surfaces collées.

15. Panneau selon l'une des revendications 10 à 14,
**caractérisé en ce que**
l'intercalaire (9) est en même matériau que les couches extérieures (3).
